# EUROPÄISCHE PATENTSCHRIFT

(11) **EP 3 495 227 B1**
(45) Veröffentlichungstag und Bekanntmachung des Hinweises auf die Patenterteilung: **06.10.2021**
(21) Anmeldenummer: 17205326.6
(22) Anmeldetag: 05.12.2017
(51) Int. Cl.: B61D 17/22, B60D 5/00

(54) **ÜBERGANG ZUR ANORDNUNG ZWISCHEN ZWEI BEWEGLICH MITEINANDER VERBUNDENEN FAHRZEUGTEILEN**
TRANSITION TO BE MOUNTED BETWEEN TWO VEHICLES WITH A JOINTED CONNECTION
PASSAGE ENTRE DEUX PARTIES DE VÉHICULE RELIÉES DE MANIÈRE MOBILE

(43) Veröffentlichungstag der Anmeldung: 12.06.2019
(73) Patentinhaber: Hübner GmbH & Co. KG, 34123 Kassel (DE)
(72) Erfinder: Przemyslaw, Staszak, 34253 Lohfelden (DE)
(74) Vertreter: Patentanwälte Walther Hinz Bayer PartGmbB

(56) Entgegenhaltungen:
- EP-A1- 0 830 262
- EP-A1- 1 568 520
- EP-A1- 1 995 086
- AT-U1- 14 552
- DE-U1-202013 100 563
- DE-U1-202017 100 698

## Beschreibung

Die Erfindung betrifft einen Übergang zur Anordnung zwischen zwei beweglich miteinander verbundenen Fahrzeugteilen eines Schienenfahrzeugs oder eines Busses, wobei der Übergang einen Hüllkörper aufweist, der wenigstens abschnittsweise aus einem Balg ausgebildet ist und einen begehbaren Durchgangsbereich und/oder ein Verbindungsmittel zur beweglichen Verbindung der beiden Fahrzeugteile außenseitig umschließt.

### STAND DER TECHNIK

Grundsätzlich wird beim Bau von Schienenfahrzeugen und Bussen gewünscht, den Flurboden innerhalb des Fahrzeugs möglichst niedrig auszulegen, um sogenannte Niederflur-Fahrzeuge zu schaffen. Dabei sollte die Flurhöhe derart niedrig ausgelegt sein, dass beispielsweise kein Höhenversatz mehr zu einer Straßenkante oder einem Bahnsteig vorherrscht. Jedoch befindet sich im unteren Bereich des Übergangs ein Verbindungsmittel zur beweglichen Verbindung der beiden Fahrzeugteile, beispielsweise ausgebildet als Gelenkverbindung. Somit ist es vorteilhaft, den Hüllkörper, der im Wesentlichen aus einem Balg, insbesondere Faltenbalg oder Wellenbalg, ausgebildet ist, unter dem Verbindungsmittel herzuführen, da das Verbindungsmittel, also beispielsweise das Gelenk, aus konstruktiven Gründen einen Mindestabstand zum Boden aufweisen muss und das Verbindungsmittel vor äußeren Einflüssen geschützt werden soll. Der begehbare Bereich des Flurbodens bzw. Übergangsbodens innerhalb des Übergangs muss sich dabei oberhalb des Gelenks befinden, sodass für Niederflur-Fahrzeuge Übergänge geschafft werden, die einen begehbaren Bodenbereich aufweisen, der sich über dem Gelenk befindet und wobei der Hüllkörper unter dem Gelenk herumgeführt wird. Der Hüllkörper bildet dabei einen geschlossenen Körper, der die Stirnseiten der beiden Fahrzeugteile miteinander verbindet.

Ähnliche Anforderungen ergeben sich auch im Dachbereich eines Übergangs zwischen zwei beweglich miteinander verbundenen Fahrzeugteilen, da dort ebenfalls ein Gelenk angeordnet sein kann und/oder beispielsweise elektrische Leitungen geführt werden oder Leitungen zum Führen von Medien zwischen den Fahrzeugteilen vorhanden sein können, sodass der Hüllkörper auch einen Dachabschnitt aufweisen kann, der flach ausgeführt sein muss.

Beispielsweise ist aus der EP 0 616 937 A1 ein Übergang für ein Schienenfahrzeug bekannt, und ein begehbarer Übergangsboden ist mit dem Hüllkörper baueinheitlich ausgeführt, sodass ein Verbindungsmittel, also beispielsweise ein Gelenk zwischen den beiden Fahrzeugteilen, nur unterhalb des Hüllkörpers angeordnet werden kann.

Aus der EP 3 205 518 A1 ist ein Übergang zur Anordnung zwischen zwei beweglichen miteinander verbundenen Fahrzeugteilen eines Schienenfahrzeugs oder eines Busses bekannt, und der Bodenabschnitt des Hüllkörpers kann zu Wartungszwecken entnommen werden. Mit der zumindest teilweisen Entnehmbarkeit ergibt sich eine weitere Anforderung an die Ausgestaltung eines Übergangs, und der Hüllkörper sollte einen Bodenabschnitt aufweisen, der wenigstens bereichsweise gelöst werden kann, insbesondere um das Gelenk zwischen den Fahrzeugteilen freizulegen. Weiter wird zum Stand der Technik noch auf die EP 1 995 086 A1 verwiesen.

Die bekannten Ausgestaltungen der Hüllkörper zur Bildung von Übergängen mit Hüllkörperabschnitten insbesondere im Bereich des Boden- oder Dachabschnittes weisen jedoch Bauhöhen auf, die die weitere Absenkung des Übergangsbodens erschweren oder unmöglich machen, insbesondere da dann, wenn die Faltenhöhe oder Wellenhöhe des Balges weiter reduziert wird, dieser durchhängen kann. Ein Durchhang des Balges als Teil des Hüllkörpers ist dabei sowohl im Bodenabschnitt als auch im Dachabschnitt zu vermeiden, wobei sich gezeigt hat, dass auch eine weitere Aussteifung von Rahmenprofilen als Teil des Balges keine hinreichende Steifigkeitserhöhung bewirken kann, um ein Durchhängen in hinreichendem Maße zu unterbinden. Insbesondere ist eine weitere Reduzierung der Falten- oder Wellentiefe nicht möglich, da die Falten oder Wellen einen ausreichenden Auszug zur Verfügung stellen müssen, um die bewegliche Verbindung der Fahrzeugteile zu ermöglichen.

### OFFENBARUNG DER ERFINDUNG

Aufgabe der Erfindung ist die Weiterbildung eines Übergangs mit einem verbesserten Hüllkörper, der einen flachbauenden Boden- oder Dachabschnitt aufweist. Insbesondere soll dabei ein Durchhängen des Boden- oder Dachabschnittes möglichst minimiert oder verhindert werden, um Bauraum für weitere Bauteile wie ein Gelenk oder Leitungen zu schaffen. Jedoch ist es erforderlich, dass der Hüllkörper sowohl den Durchgangsbereich des Übergangs sowie bevorzugt auch das Verbindungsmittel, also beispielsweise ein Gelenk zwischen den Fahrzeugteilen, mit umschließt.

Diese Aufgabe wird ausgehend von einem Übergang gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass der Hüllkörper wenigstens einen Hüllkörperabschnitt aufweist, der zwei formstabile Flächenkörper umfasst, wobei die Flächenkörper zur Anordnung an den Fahrzeugteilen ausgebildet sind oder durch einen Abschnitt des Fahrzeugteils ausgebildet sind, wobei die Rahmenprofile an den Flächenkörpern angebunden sind.

Wird der formstabile Flächenkörper als Teil des Hüllkörpers in einem Bereich ausgebildet, der gegen ein Durchhängen geschützt werden soll, so kann dieser formstabile Flächenkörper aufgrund der Formstabilität den Hüllkörper vor dem Durchhängen bewahren, wobei zugleich der weitere Vorteil erreicht wird, dass der formstabile Flächenkörper sehr flach bauend ausgebildet werden kann.

Kerngedanke der Erfindung ist damit eine neuartige Ausgestaltung insbesondere des Boden- oder Dachabschnitts des Hüllkörpers, der durch den Hüllkörperabschnitt gebildet ist, wobei die formstabilen Flächenkörper selbst einen Teil des Boden- oder Dachabschnitts und damit des Hüllkörpers bilden. Der Boden- oder Dachabschnitt neigt aufgrund der horizontal verlaufenden Wellen oder Falten des Balges insbesondere zum Durchhängen, wobei vor allem der Bodenabschnitt aber auch der Dachabschnitt wie eingangs beschrieben flach ausgebildet sein muss.

Die formstabilen Flächenkörper im Bodenabschnitt sind dabei so angeordnet, dass diese das Verbindungsmittel zwischen den beiden Fahrzeugteilen, also beispielsweise das Gelenk, als Bestandteil des Hüllkörpers mit umhüllen, sodass sich die formstabilen Flächenkörper insbesondere unterhalb des Verbindungsmittels befinden. Oberhalb des Verbindungsmittels befindet sich dabei auf an sich bekannte Weise der Übergangsboden, der folglich separat und beabstandet zu den formstabilen Flächenkörpern ausgebildet ist.

Gemäß einer weiteren Variante befindet sich das Verbindungsmittel unterhalb des Hüllkörpers, sodass sich der Hüllkörper und insbesondere die formstabilen Flächenkörper zwischen dem Verbindungsmittel und dem Übergangsboden befindet. Auch bei dieser Ausführungsvariante wird gemäß der vorliegenden Erfindung Bauraum eingespart, da der Hüllkörper wenigstens einen formstabilen Flächenkörper aufweist, der im Wesentlichen keine Falten oder Wellen aufweist. Entscheidend dabei ist, dass der Flächenkörper an seiner angeordneten Position den Balg ersetzt, insbesondere sodass nicht der Flächenkörper und der Balg zumindest flächenabschnittsweise zugleich den Hüllkörper bilden.

Die formstabilen Flächenkörper können dabei im Sinne der Erfindung separate Bauteile ohne eine weitere Funktionalität sein, die nur mit dem Fahrzeugteil verbunden sind. Damit können die Flächenkörper folglich direkter Bestandteil des Fahrzeugteils sein, wobei auch die Möglichkeit besteht, dass die Flächenkörper Bestandteil des Verbindungsmittels sind. Die formstabilen Flächenkörper bilden gemeinsam mit dem Balg den Hüllkörper, wobei wenigstens ein Flächenkörper beispielsweise auch ein Strukturbestandteil des Verbindungsmittels zwischen den Fahrzeugteilen sein kann, beispielsweise ein Adapter, ein Träger oder Anbindungsbauteil eines Gelenkes.

In vorteilhafter Weise ragt der Balg des Hüllkörpers bis in den Bodenabschnitt bzw. bis in den Dachabschnitt hinein und ist an den Flächenkörpern angebunden. Im Boden- bzw. Dachabschnitt des Hüllkörpers erstrecken sich der Balg und die Flächenkörper folglich im Wesentlichen in einer gemeinsamen Ebene, die den Übergang nach unten bzw. nach oben hin abschließt.

Gemäß einer vorteilhaften Ausgestaltung der erfindungsgemäßen Flächenkörper sind diese dreieckförmig oder trapezförmig ausgebildet. Die Dreieckform oder die Trapezform der Flächenkörper besitzt dabei eine Grundkante und die Flächenkörper sind mit der Grundkante an dem Fahrzeugteil insbesondere starr befestigt. Die Form der Flächenkörper ist auf die Bewegungsanforderungen der beiden Fahrzeugteile zueinander angepasst, sodass beispielsweise ein ausreichend großer Knickwinkel zwischen den Fahrzeugteilen realisiert werden kann, ohne dass die Flächenkörper aufeinander stoßen. Die Flächenkörper können durch Bleche gebildet sein, beispielsweise Stahlbleche oder Aluminiumbleche, wobei auch alternative Werkstoffe zur Bildung der Flächenkörper denkbar sind, beispielsweise Kunststoffe oder Verbundwerkstoffe oder die Flächenkörper weisen ein Textil auf, welches in mindestens zwei Raumrichtungen gespannt ist, um eine ausreichende Formstabilität zu erreichen. Insbesondere handelt es sich bei dem formstabilen Flächenkörper um ein vergleichsweise flaches Bauteil, welches insbesondere keine Falten oder Wellen aufweist.

Gemäß einer weiteren Ausführungsform weist der Übergang einen Mittelrahmen auf, an den sich zwei Balghälften anschließen. Im Rahmen einer vorteilhaften Ausführungsform können sich die Flächenkörper dabei an den Mittelrahmen anschließen.

Die Grundkanten der Flächenkörper weisen Befestigungsaufnahmen für die Aufnahme von Befestigungsmitteln auf, wobei mit den Befestigungsmitteln die Flächenkörper starr an die Fahrzeugteile angeordnet werden können. Die Flächenkörper besitzen in einem der Grundkante gegenüberliegenden Bereich Befestigungsaufnahmen zur Anordnung der Flächenkörper an das Verbindungsmittel. Somit können die Flächenkörper beispielsweise unterseitig an das Gelenk zwischen den Fahrzeugteilen angeschraubt werden, sodass die Flächenkörper in der Höhe fixiert sind, und ein Durchhängen des Hüllkörpers insbesondere im Bodenabschnitt unterbunden ist.

Da eine Bewegung zwischen den Fahrzeugteilen stattfindet und da die Flächenkörper an den jeweiligen Fahrzeugteilen mit ihren Grundkanten befestigt sind, ist mit weiterem Vorteil in einem Bereich zwischen den Flächenkörpern ein flexibler Stoff angeordnet. Sind die beiden Flächenkörper dreieckförmig ausgebildet, so weisen die Spitzen der dreieckförmigen Flächenkörper, die sich über den Grundkanten befinden, aufeinander zu. Der flexible Stoff, beispielsweise ein Textil oder auch ein Elastomer, insbesondere ein gummielastischer Stoff, ist dabei in einem mittleren Bereich zwischen den beiden Flächenkörpern angeordnet. Sind die Flächenkörper trapezförmig ausgebildet, bildet die kürzere Trapezkante über der Grundkante einen Befestigungsabschnitt zur Befestigung des flexiblen Stoffes.

Der Balg zur Bildung des überwiegenden Teils des Hüllkörpers weist mehrere Rahmenprofile auf, die an den Flächenkörpern angebunden sind. Damit entsteht ein Lückenschluss zwischen dem Balg und den Flächenkörpern, der insbesondere auch feuchtigkeits- und schmutzdicht ausgebildet sein kann. Die Anbindung der Rahmenprofile an die Flächenkörper kann mittels Verbindungsmitteln lösbar ausgebildet sein. Somit können die Flächenkörper beispielsweise zu Wartungszwecken entnommen werden, indem die Rahmenprofile von den Flächenkörpern gelöst werden und indem die Flächenkörper vom Verbindungsmittel zwischen den Fahrzeugteilen gelöst werden.

Eine vorteilhafte Ausgestaltung der Verbindungsmittel sieht vor, dass diese ein jeweiliges Loch in den Flächenkörpern umfassen, in die ein Endstück der Rahmenprofile eingesetzt werden kann. Dabei ist mit weiterem Vorteil das in das Loch eingesetzte Endstück mit einem Sicherungsmittel gesichert, sodass eine Entnahme der Rahmenprofile von den Flächenkörpern durch Lösen des Sicherungsmittels vom Endstück ermöglicht ist.

Die Flächenkörper stehen sich in Fahrtrichtung der Fahrzeugteile gegenüber, wobei der Balg sich in seitliche Zwischenbereiche der dreieckförmigen oder trapezförmigen Flächenkörper hinein erstreckt. Die Flächenkörper weisen schräge Kanten auf, die sich über der Grundkante erstrecken und der Balg, der bis in den Boden- oder Dachabschnitt hineingeführt ist, ragt in die sich ergebenen seitlichen Zwischenbereiche, die eine V-förmige Kontur besitzen, hinein. Die Rahmenprofile sind dabei in den schrägen Kanten der Flächenprofile an diese angebunden.

Gemäß einer weiteren Ausführungsvariante enden die Rahmenprofile des Balges bündig oder beabstandet zu den Flächenkörpern während das Balgmaterial der Wellen bzw. Falten über die Balgrahmen hinübersteht und mit den Flächenkörpern verbunden wird. Beispielsweise kann das überstehende Balgmaterial endseitig in ein Profil eingefasst werden, welches beispielsweise mit dem Flächenkörper verschraubt werden kann. Alternativ kann das überstehende Balgmaterial auf dem Flächenkörper aufliegen und dort zusätzlich mit dem Flächenkörper verbunden werden, beispielsweise mit einem Gummispannband.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Ansicht eines Übergangs mit einem Hüllkörper, der sowohl ein Verbindungsmittel zwischen den beiden Fahrzeugen als auch einen Durchgangsbereich umhüllt;
- Figur 2: eine erste perspektivische Ansicht eines Hüllkörperabschnittes am Beispiel eines Bodenabschnitts des Hüllkörpers mit einem Balg und mit einem Verbindungsmittel in Form eines Gelenkes;
- Figur 3: die perspektivische Ansicht des Bodenabschnittes des Hüllkörpers gemäß Figur 2 wobei die Wellen des Balges und das Gelenk nicht dargestellt sind und
- Figur 4: eine perspektivische Ansicht eines möglichen Ausführungsbeispiels zur Ausbildung eines Verbindungsmittels zwischen einem Rahmenprofil und einem Flächenkörper.

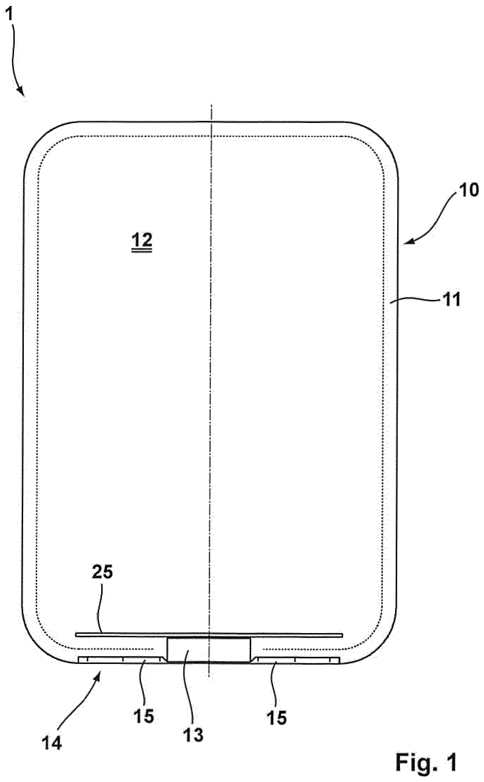

Figur 1 zeigt die Ansicht eines Übergangs 1 aus einer Blickrichtung, die der Fahrtrichtung eines Schienenfahrzeugs oder eines Busses entspricht, an dem der Übergang 1 angeordnet ist. Der Übergang 1 dient zur Anordnung zwischen zwei Fahrzeugteilen des Schienenfahrzeugs oder des Busses, und weist einen Hüllkörper 10 auf, der etwa die Kontur des Querschnitts der Fahrzeugteile besitzt. Der Hüllkörper 10 ist im Wesentlichen aus einem Balg 11 gebildet, wobei der Hüllkörper 10 mit einem Hüllkörperabschnitt 14 dargestellt ist, der beispielhaft einen unterseitigen Bodenabschnitt bildet, in den der Balg 11 zumindest abschnittsweise hineinläuft, wobei auf gleiche Weise der Hüllkörperabschnitt 14 auch einen Dachabschnitt bilden kann.

Der Hüllkörper 10 umschließt dabei einen Durchgangsbereich 12 des Übergangs 1, der einen Übergangsboden 25 aufweist, welcher begehbar ist, und der Hüllkörper 10 umschließt unterseitig weiterhin ein Verbindungsmittel 13, mit dem die beiden Fahrzeugteile des Schienenfahrzeugs oder des Busses kraftübertragend verbunden sind. Beispielsweise bildet das Verbindungsmittel 13 ein Gelenk oder eine Kupplung zwischen den Fahrzeugteilen.

Gemäß der Erfindung weist der Hüllkörperabschnitt 14 zwei formstabile Flächenkörper 15 auf, wobei die Flächenkörper 15 zur Anordnung an den Fahrzeugteilen ausgebildet sind. Die Darstellung zeigt dabei die Anordnung der Flächenkörper 15 im Wesentlichen unterhalb des Verbindungsmittels 13, wobei die Flächenkörper 15 nicht Bestandteil des begehbaren Übergangsbodens 25 sind und die Flächenkörper 15 bilden auch insbesondere keine Verbindungsbestandteile des Verbindungsmittels 13 mit den jeweiligen Fahrzeugteilen. Vielmehr bilden die formstabilen Flächenkörper 15 einen Teil des Hüllköpers 10 im Hüllkörperabschnitt 14, gezeigt am Beispiel eines Bodenabschnittes. Durch die Ausbildung des Hüllkörperabschnittes 14 mit formstabilen Flächenkörpern 15 wird der Vorteil erreicht, dass ein Durchhängen des gezeigten Bodenabschnittes vermieden wird, auch wenn die resultierende Bauhöhe des Bodenabschnittes sehr gering gehalten ist, beispielsweise kleiner als 45 mm Bauhöhe.

Der Übergang 1 dient dabei insbesondere zur Verbindung von Fahrzeugteilen von Schienenfahrzeugen oder Bussen, die als Niederflur-Fahrzeuge ausgebildet sind, und die besonders niedrige Höhe des begehbaren Übergangsbodens 25 wird insbesondere auch dadurch erreicht, dass der Hüllkörper 10 des Übergangs 1 zwar unter dem Verbindungsmittel 13 hergeführt ist, jedoch im Bereich der Flächenkörper die Höhe der Wellen bzw. Falten eingespart wird und insbesondere in diesen Bereichen weitere Bauteile (z. B. Gelenk) platzsparend angeordnet werden können.

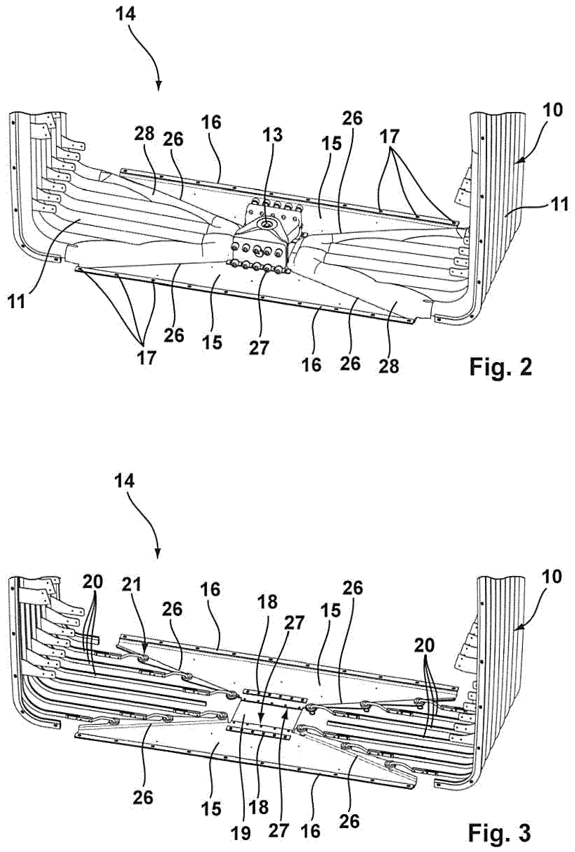

Figur 2 zeigt eine perspektivische Ansicht des Hüllkörperabschnittes 14 des Übergangs als Bodenabschnitt, wobei der Bodenabschnitt einen Teil des Hüllkörpers 10 bildet. Der Balg 11 verläuft in den horizontalen Bereich des Hüllkörperabschnittes 14 hinein und bildet folglich auch einen Bestandteil des Bodenabschnittes unterseitig des Verbindungsmittels 13 aus, das beispielsweise ein Gelenk zur Verbindung der beiden Fahrzeugteile bildet.

Gemäß der Erfindung ist der wesentliche Bestandteil des Hüllkörperabschnittes 14 durch zwei formstabile Flächenkörper 15 gebildet, die beispielsweise Metallbleche umfassen, insbesondere Stahlbleche oder Aluminiumbleche. Die Flächenkörper 15 sind dreieckförmig oder trapezförmig ausgebildet und besitzen eine Grundkante 16, die zur Anbindung der Flächenkörper 15 an die Fahrzeugteile dient. Hierzu weist die Grundkante 16 Befestigungsaufnahmen 17 auf, beispielsweise um den Flächenkörper 15 über die Grundkante 16 an der unteren Kante der Stirnseite der Fahrzeugteile zu verschrauben. Gegenüberliegend zur Grundkante 16 verlaufen schräge Kanten 26 der dreieckförmigen oder trapezförmigen Flächenkörper 15, wobei gemäß der beispielhaft dargestellten Ausführungsform die schrägen Kanten 26 in eine Dachkante 27 übergehen, die parallel gegenüber der Grundkante 16 verläuft, sodass das Ausführungsbeispiel trapezförmige Flächenkörper 15 bildet. Im Bereich der Dachkante 27 sind die Flächenkörper 15 unterseitig mit dem Verbindungsmittel 13 verschraubt.

Der Balg 11 weist einen durchgehenden Bereich in die Flächenkörper auf, der abgedeckt ist mit einem entsprechend angepassten Stoffmantel 28. Dieser kann innenseitig auf den Wellen des Balges lediglich aufliegen oder beispielsweise zusätzlich zur Abdichtung mit der Kontur des Flächenkörpers 15 im Bereich der schrägen Kanten 26 verbunden sein, beispielsweise mittels einer Klebeverbindung oder bevorzugt einer Klettverbindung.

Figur 3 zeigt die Ansicht des Hüllkörperabschnittes 14 gemäß Figur 2 am Beispiel des Bodenabschnittes, wobei die Wellen des Balges und das Verbindungsmittel nicht dargestellt sind. Die Ansicht verdeutlicht die Ausführung des Balges mit Rahmenprofilen 20, die an die Flächenkörper 15 angebunden sind. Hierzu dienen Verbindungsmittel 21, wobei die Verbindung der Rahmenprofile 20 an die Flächenkörper 15 so erfolgt, dass sich die Rahmenprofile 20 bewegen können, insbesondere um eine Kurvenfahrt des Schienenfahrzeugs oder des Busses zu ermöglichen.

Die Ansicht verdeutlicht weiterhin, dass die Flächenkörper 15 mit den Rahmenprofilen 20 etwa in einer gemeinsamen Ebene liegen und/oder dass die Rahmenprofile 20 an die Kontur der Flächenkörper 15 im Bereich der schrägen Kanten 26 angepasst sind, insbesondere derart, dass die Rahmenprofile 20 an die schrägen Kanten 26 mittels der Verbindungsmittel 21 angebunden werden können.

Zwischen den beiden Dachkanten 27 der Flächenkörper 15 befindet sich ein flexibler Stoff 19 und in einer Kurvenfahrt können sich die dreieckförmigen bzw. trapezförmigen Flächenkörper 15 in der Ebene derart verlagern, dass die schrägen Kanten 26 der gegenüberliegenden Flächenkörper 15 in der Kurveninnenseite aufeinander zu bewegt und in der Kurvenaußenseite voneinander weg bewegt werden können. Durch die bewegliche Verbindung der Rahmenprofile 20 mit den Flächenkörpern 15 über die Verbindungsmittel 21 kann die Kurvenbewegung auch mit den Rahmenprofilen 20 ausgeführt werden, sodass die Beweglichkeit des Übergangs durch die Ausgestaltung des Hüllkörperabschnittes 14 mit den Flächenkörpern 15 nicht eingeschränkt ist. Insbesondere auch ein Querversatz beider Fahrzeugteile zueinander kann ausgeführt werden, sofern der flexible Stoff 19 entsprechend ausgelegt ist, beispielsweise indem dieser entsprechend nachgiebig ist. Für die Ausführung des Übergangs mit der Möglichkeit eines Querversatzes kann das Verbindungsmittel 13 entsprechend alternativ ausgeführt werden, und muss nicht zwingend über die Befestigungsaufnahmen 18 mit den Flächenkörpern 15 an den Dachkanten 27 verschraubt sein.

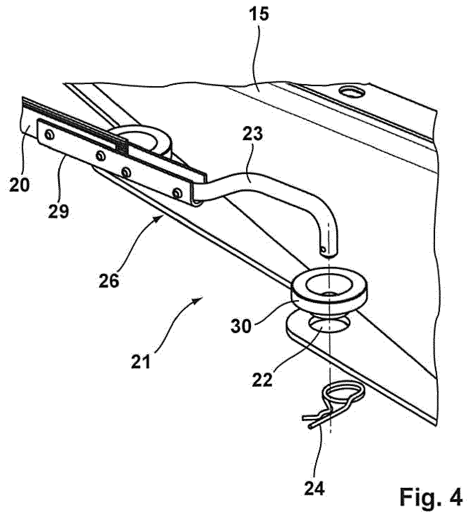

Figur 4 zeigt in einer beispielhaften Ausgestaltung ein Verbindungsmittel 21 zur Verbindung eines Rahmenprofils 20 mit dem Flächenkörper 15 im Bereich einer schrägen Kante 26. Das Verbindungsmittel 21 umfasst ein Endstück 23, das mittels eines U-Profils 29 mit dem Rahmenprofil 20 verbunden ist. Das Endstück 23 ist als Rundstange ausgeführt und so gebogen, dass dieses von oben in ein Loch 22 eingesetzt werden kann, das nahe der schrägen Kante 26 im Flächenkörper 15 eingebracht ist. Zur verschleissarmen Verbindung des Endstückes 23 mit dem Flächenkörper 15 dient ein elastischer Ringkörper 30, durch den das Endstück 23 hindurchgeführt ist, und wobei der Ringkörper 30 im Loch 22 des Flächenkörpers 15 eingesetzt ist. Ragt das Ende des Endstückes 23 unterhalb des Loches 22 aus dem Flächenkörper 15 hervor, kann das Endstück 23 mit einem Sicherungsmittel 24 beispielsweise in Form einer Sicherungsnadel gesichert werden. So kann durch ein einfaches Herausnehmen des Sicherungsmittels 24 das Rahmenprofil 20 vom Flächenkörper 15 gelöst werden, insbesondere um die Flächenkörper 15 aus dem Hüllkörper 10 zu entfernen, beispielsweise um das Verbindungsmittel 13 freizulegen.

Der erfindungsgemäße Übergang mit formstabilen Flächenkörpern 15 im Hüllkörperabschnitt 14 ermöglicht eine besondere Niederflurbauweise von Fahrzeugen mit niedriger Höhe eines Übergangsbodens 25, wobei das Verbindungsmittel 13 ebenfalls mit dem Hüllkörper 10 umschlossen ist. Der besondere Vorteil liegt darin, dass der Hüllkörper 10 im Hüllkörperabschnitt 14 nicht mehr durchhängen kann, da unabhängig von der Steifigkeit der Rahmenprofile 20 die tragenden Eigenschaften der Flächenkörper 15 hinreichend sind, um ein Durchhängen zu verhindern. Außerdem wird die Bauhöhe in der Art verringert, dass insbesondere im Bereich des Verbindungsmittels der Hüllkörper keine Falten oder Wellen mit entsprechender Höhe aufweist, sondern insbesondere dort durch einen relativ flachen Flächenkörper gebildet wird.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebraucht macht. Sämtliche aus den Ansprüchen, der Beschreibung oder der Zeichnungen hervorgehenden Merkmale und/oder Vorteile, einschließlich konstruktiver Einzelheiten oder räumliche Anordnungen können sowohl für sich als auch in den verschiedensten Kombinationen erfindungswesentlich sein.

### Bezugszeichenliste:

- 1: Übergang

- 10: Hüllkörper
- 11: Balg
- 12: Durchgangsbereich
- 13: Verbindungsmittel
- 14: Hüllkörperabschnitt
- 15: Flächenkörper
- 16: Grundkante
- 17: Befestigungsaufnahme
- 18: Befestigungsaufnahme
- 19: flexibler Stoff
- 20: Rahmenprofil
- 21: Verbindungsmittel
- 22: Loch
- 23: Endstück
- 24: Sicherungsmittel
- 25: Übergangsboden
- 26: schräge Kante
- 27: Dachkante
- 28: Stoffmantel
- 29: U-Profil
- 30: Ringkörper

## Patentansprüche

1. Übergang (1) zur Anordnung zwischen zwei beweglich miteinander verbundenen Fahrzeugteilen eines Schienenfahrzeugs oder eines Busses, wobei der Übergang (1) einen Hüllkörper (10) aufweist, der wenigstens abschnittsweise aus einem Balg (11), welcher mehrere Rahmenprofile (20) aufweist, ausgebildet ist und einen begehbaren Durchgangsbereich (12), welcher einen Übergangsboden (25) aufweist, und/oder ein Verbindungsmittel (13) zur beweglichen Verbindung der beiden Fahrzeugteile außenseitig umschließt, **dadurch gekennzeichnet,**
**dass** der Hüllkörper (10) wenigstens einen Hüllkörperabschnitt (14) aufweist, der zwei formstabile Flächenkörper (15) umfasst, wobei die Flächenkörper (15) zur Anordnung an den Fahrzeugteilen ausgebildet sind oder durch einen Abschnitt des Fahrzeugteils ausgebildet sind, wobei die Rahmenprofile (20) an den Flächenkörpern (15) angebunden sind.

2. Übergang (1) nach Anspruch 1,
**dadurch gekennzeichnet,**
**dass** der Hüllkörperabschnitt (14) einen Bodenabschnitt und/oder einen Dachabschnitt des Hüllkörpers (10) bildet.

3. Übergang (1) nach Anspruch 2,
**dadurch gekennzeichnet,**
**dass** der Balg (11) des Hüllkörpers (10) bis in den Bodenabschnitt und/oder bis in den Dachabschnitt hineinragt und an dem wenigstens einen Flächenkörper (15) angebunden ist.

4. Übergang (1) nach einem der vorgenannten Ansprüche,
**dadurch gekennzeichnet,**
**dass** der wenigstens eine Flächenkörper (15) dreieckförmig, trapezförmig oder kreissegmentförmig ausgebildet ist.

5. Übergang (1) nach Anspruch 4,
**dadurch gekennzeichnet,**
**dass** die Dreieckform, die Trapezform oder die Kreissegmentform der Flächenkörper (15) eine Grundkante (16) aufweist, mit der der mindestens eine Flächenkörper (15) an den Fahrzeugteilen befestigbar oder in diese einteilig übergehend ausgebildet sind.

6. Übergang (1) nach Anspruch 5,
**dadurch gekennzeichnet,**
**dass** die Grundkante (16) des mindestens einen Flächenkörpers (15) Befestigungsaufnahmen (17) für die Aufnahme von Befestigungsmitteln aufweisen, um den mindestens einen Flächenkörper (15) starr an das Fahrzeugteil anzuordnen.

7. Übergang (1) nach Anspruch 5 oder 6,
**dadurch gekennzeichnet,**
**dass** der mindestens eine Flächenkörper (15) in einem der Grundkante (16) gegenüberliegenden Bereich Befestigungsaufnahmen (18) zur Anordnung des mindestens einen Flächenkörpers (15) an das Verbindungsmittel aufweist.

8. Übergang (1) nach einem der vorgenannten Ansprüche,
**dadurch gekennzeichnet,**
**dass** in einem Bereich zwischen den Flächenkörpern (15) ein flexibler Stoff (19) angeordnet ist.

9. Übergang (1) nach einem der vorgenannten Ansprüche,
**dadurch gekennzeichnet,**
**dass** der Balg (11) an dem mindestens einen Flächenkörper (15) angebunden ist.

10. Übergang nach Anspruch 9,
**dadurch gekennzeichnet,**
**dass** der Balg (11) ein Balgmaterial aufweist, das zumindest teilweise auf dem mindestens einen Flächenkörper aufliegt und/oder an dem mindestens einen Flächenkörper angebunden ist.

11. Übergang (1) nach einem der vorgenannten Ansprüche,
**dadurch gekennzeichnet,**
**dass** die Anbindung der Rahmenprofile (20) mittels Verbindungsmitteln (21) lösbar ausgebildet ist.

12. Übergang (1) nach Anspruch 11,
**dadurch gekennzeichnet,**
**dass** die Verbindungsmittel (21) ein Loch (22) in den Flächenkörpern (15) umfassen, in das ein Endstück (23) der Rahmenprofile (20) einsetzbar ist.

13. Übergang (1) nach Anspruch 12,
**dadurch gekennzeichnet,**
**dass** das in das Loch (22) eingesetzte Endstück (23) mit einem Sicherungsmittel (24) gesichert ist, sodass eine Entnahme der Rahmenprofile (20) von den Flächenkörpern (15) durch Lösen des Sicherungsmittels (24) vom Endstück (23) ermöglicht ist.

14. Übergang (1) nach einem der vorgenannten Ansprüche,
**dadurch gekennzeichnet,**
**dass** sich die Flächenkörper (15) in Fahrtrichtung der Fahrzeugteile gegenüberstehen und/oder dass der Balg (11) sich in seitliche Zwischenbereiche der dreieckförmigen, trapezförmigen oder kreissegmentförmigen Flächenkörper (15) hinein erstreckt.

## Claims

1. A passageway (11) for arrangement between two vehicle parts of a rail vehicle or of a bus that are movably connected to one another, wherein the passageway (1) has an enveloping member (10), that is formed at least sectionally from a bellows (11) that has a plurality of frame sections (20). and outwardly surrounds a walkable passage region (12) that has a passageway floor (25) and/or a connection means (13) for the movable connection of the two vehicle parts, **characterized in that**
the enveloping member (10) has at least one enveloping member section (14) that comprises two surface members (15) of stable shape, with the surface members (15) being configured for arrangement at the vehicle parts or being formed by a section of the vehicle part, with the frame sections (20) being connected to the surface members (15).

2. A passageway (1) in accordance with claim 1,
**characterized in that**
the enveloping member section (14) forms a floor section and/or a roof section of the enveloping member (10).

3. A passageway (1) in accordance with claim 2,
**characterized in that**
the bellows (11) of the enveloping member (10) projects up to and into the floor section and/or up to and into the roof section and is connected to the at least one surface member (15).

4. A passageway (1) in accordance with one of the preceding claims, **characterized in that**
the at least one surface member (15) is configured as triangular, trapezoidal, or of circle segment shape.

5. A passageway (1) in accordance with claim 4,
**characterized in that**
the triangular shape, the trapezoidal shape, or the circle segment shape of the surface members (15) has a base edge (16) by which the at least one surface member (15) is fastenable to the vehicle parts or is formed as merging into them in one part.

6. A passageway (1) in accordance with claim 5,
**characterized in that**
the base edge (16) of the at least one surface member (15) has fastening mounts (17) for the receiving of fastening means to arrange the at least one surface member (15) rigidly at the vehicle part.

7. A passageway (1) in accordance with claim 5 or claim 6, **characterized in that**
the at least one surface member (15) has fastening mounts (18) in a region disposed opposite the base edge (16) for the arrangement of the at least one surface member (15) at the connection means.

8. A passageway (1) in accordance with one of the preceding claims, **characterized in that**
a flexible material (19) is arranged in a region between the surface members (15).

9. A passageway (1) in accordance with one of the preceding claims, **characterized in that**
the bellows (11) is connected to the at least one surface member (15).

10. A passageway in accordance with claim 9,
**characterized in that**
the bellows (11) comprises a bellows material that lies at least in part on the at least one surface member and/or is connected to the at least one surface member.

11. A passageway (1) in accordance with one of the preceding claims, **characterized in that**
the connection of the frame sections (20) by means of connection means (21) is configured as releasable.

12. A passageway (1) in accordance with claim 11,
**characterized in that**
the connection means (21) comprise a hole (22) in the surface members (15) into which an end piece (23) of the frame sections (20) is insertable.

13. A passageway (1) in accordance with claim 12,
**characterized in that**
the end piece (23) inserted into the hole (22) is secured by a securing means (24) so that a removal of the frame sections (20) from the surface members (15) is made possible by releasing the securing means (24) from the end piece (23).

14. A passageway (1) in accordance with one of the preceding claims, **characterized in that**
the surface members (15) are disposed opposite one another in the direction of travel of the vehicle parts; and/or **in that** the bellows (11) extends into lateral intermediate regions of the triangular, trapezoidal, or circle segment shaped surface members (15).

## Revendications

1. Passage (1) destiné à être agencé entre deux parties de véhicule reliées l'une à l'autre de manière mobile d'un véhicule ferroviaire ou d'un bus, le passage (1) comportant un corps enveloppant (10), qui est constitué au moins sur certaines parties d'un soufflet (11), qui comporte plusieurs profilés de cadre (20), et entoure sur le côté extérieur une zone de passage (12) praticable, qui comporte un plancher de passage (25), et/ou un moyen de liaison (13) pour la liaison mobile des deux parties de véhicule,
**caractérisé en ce que**
le corps enveloppant (10) comporte au moins une section de corps enveloppant (14), qui comprend deux corps plans (15) de forme stable, les corps plans (15) étant conçus pour être agencés sur les parties de véhicule ou étant constitués par une section de la partie de véhicule, les profilés de cadre (20) étant reliés aux corps plans (15).

2. Passage (1) selon la revendication 1,
**caractérisé en ce que**
la section de corps enveloppant (14) forme une section de plancher et/ou une section de toit du corps enveloppant (10).

3. Passage (1) selon la revendication 2,
**caractérisé en ce que**
le soufflet (11) du corps enveloppant (10) dépasse jusque dans la section de plancher et/ou jusque dans la section de toit et est relié à l'au moins un corps plan (15).

4. Passage (1) selon l'une des revendications précédentes, **caractérisé en ce que**
l'au moins un corps plan (15) est réalisé en forme de triangle, en forme de trapèze ou en forme de segment de cercle.

5. Passage (1) selon la revendication 4,
**caractérisé en ce que**
la forme de triangle, la forme de trapèze ou la forme de segment de cercle du corps plan (15) comporte une arête de base (16), avec laquelle l'au moins un corps plan (15) peut être fixé aux parties de véhicule ou est réalisé se prolongeant dans celles-ci d'un seul tenant.

6. Passage (1) selon la revendication 5,
**caractérisé en ce que**
l'arête de base (16) de l'au moins un corps plan (15) comporte des logements de fixation (17) pour recevoir des moyens de fixation pour agencer l'au moins un corps plan (15) de manière rigide sur la partie de véhicule.

7. Passage (1) selon la revendication 5 ou 6,
**caractérisé en ce que**
l'au moins un corps plan (15) comporte, dans une zone opposée à l'arête de base (16), des logements de fixation (18) destinés à l'agencement de l'au moins un corps plan (15) sur le moyen de liaison.

8. Passage (1) selon l'une des revendications précédentes, **caractérisé en ce que**
un matériau (19) flexible est agencé dans une zone située entre les corps plans (15).

9. Passage (1) selon l'une des revendications précédentes, **caractérisé en ce que**
le soufflet (11) est relié à l'au moins un corps plan (15).

10. Passage selon la revendication 9,
**caractérisé en ce que**
le soufflet (11) comporte un matériau de soufflet, qui repose au moins en partie sur l'au moins un corps plan et/ou est relié à l'au moins un corps plan.

11. Passage (1) selon l'une des revendications précédentes, **caractérisé en ce que**
la liaison des profilés de cadre (20) est réalisée par des moyens de liaison (21) de manière libérable.

12. Passage (1) selon la revendication 11,
**caractérisé en ce que**
les moyens de liaison (21) comprennent un trou (22) dans les corps plans (15), dans lequel un embout (23) des profilés de cadre (20) peut être inséré.

13. Passage (1) selon la revendication 12,
**caractérisé en ce que**
l'embout (23) inséré dans le trou (22) est bloqué au moyen d'un moyen de sûreté (24), de telle sorte qu'un retrait des profilés de cadre (20) hors des corps plans (15) est rendu possible en enlevant le moyen de sûreté (24) de l'embout (23).

14. Passage (1) selon l'une des revendications précédentes, **caractérisé en ce que**
les corps plans (15) se font face dans le sens de la marche des parties de véhicule et/ou **en ce que** le soufflet (11) s'étend dans des zones intermédiaires latérales des corps plans (15) en forme de triangle, en forme de trapèze ou en forme de segment de cercle.
